# EUROPEAN PATENT APPLICATION

(11) **EP 4 216 322 A1**
(43) Date of publication of application: **26.07.2023**
(21) Application number: 21869469.3
(22) Date of filing: 17.09.2021
(51) Int. Cl.: H01M 10/04

(54) **POWER STORAGE DEVICE**

(30) Priority: 21.09.2020 US 202063080991 P
(71) Applicant: Panasonic Intellectual Property Management Co., Ltd., Osaka-shi, Osaka 540-6207 (JP)
(72) Inventor: GESHI, Shinya, Osaka-shi, Osaka 540-6207 (JP); SAKAMOTO, Shinichi, Osaka-shi, Osaka 540-6207 (JP); SHIMIZU, Kazumichi, Osaka-shi, Osaka 540-6207 (JP); KOZUKI, Kiyomi, Osaka-shi, Osaka 540-6207 (JP); KOHIRA, Kazutoshi, Osaka-shi, Osaka 540-6207 (JP)
(74) Representative: Novagraaf International SA
(86) International application number: PCT/JP2021/034413
(87) International publication number: WO 2022/059787

(57) **Abstract**

A power storage device has a columnar wound body in which a first electrode and a second electrode are placed on top of another with a separator interposed therebetween. The first electrode has a f first portion A, a second portion A, and a first connection portion that connects the first portion A with the second portion A, and the first portion A and the second portion A face each other. The first connection portion is provided in a band region of the first current collector along the winding direction of the wound body, as a first exposed portion not having the first active material layer and exposing the first current collector. The first portion A and the second portion A are portions each having the first active material layer at both sides of the first connection portion. The second electrode is sandwiched by the first portion A and the second portion A with the separator interposed therebetween, and wound along the winding direction to form the wound body.

## Description

### TECHNICAL FIELD

The present disclosure relates to a power storage device.

### BACKGROUND ART

A secondary battery with a high capacity and a high output has been in demand along with an increase in demand for vehicle applications.

To increase the battery capacity, simply, an electrode plate area is increased.
However, when a high output discharge is performed in this case, the amount of heat generation increases, and therefore the battery temperature tends to increase. When a battery is continuously used under a certain temperature or more, internal deterioration occurs to decrease the capacity.

As a current collecting method to suppress the internal heat generation of a battery and achieve a high output, a multi-tab current collecting method or a tabless current collecting method is used: in the multi-tab current collecting method, a plurality of tabs (internal lead) are connected to an electrode plate, and electrical connection between the electrode plate and terminal plate or battery can is performed through the plurality of tabs, and in the tabless current collecting method, an end portion or end face of the electrode plate is electrically connected to the terminal plate or battery can through, for example, the current collecting plate.

As an example of the tabless current collecting method, Patent Literature 1 discloses a method: in a secondary battery having an electrode plate group and a liquid electrolyte accommodated in a battery vessel, the electrode plate group is formed by stacking a positive electrode plate with a positive electrode current collector to which a positive electrode material is attached, a negative electrode plate with a negative electrode current collector to which a negative electrode material is attached, and a separator interposed therebetween, in at least one side of the electrode plate group, the current collector of any of the electrode plates is projected, and bumps projected toward the projected portion of the current collector are provided in the current collecting plate. By pressing the bumps of the current collecting plate against the distal end of the projected portion of the current collector, a plastically deformed flat portion is formed at the current collector and at the bumps, the flat portion of the current collector and the current collecting plate are welded.

### Citation List

### Patent Document

Patent Literature 1: Patent No. 4866496 Specification

### SUMMARY OF THE INVENTION

### PROBLEM TO BE SOLVED BY THE INVENTION

In the multi-tab current collecting method, a region (unapplied region) where not covered with an electrode material layer and current collector is exposed has to be provided in the electrode plate in a plural number. Thus, increasing the number of the tabs for achieving a low resistance causes decrease in the application area of the electrode material, and decrease in the battery capacity.

With the tabless current collecting method, the end portion or end face of the electrode plate is directly connected to an external component such as a terminal plate or battery can, and a low resistance can be achieved. However, because the strength of metal foil, i.e., the current collector, is low, and therefore the metal foil may go through excessive deformation when the end portion of the current collector is pressed against the external component to be welded. Considering the deformation of foil, when the area of the end portion where the current collector is exposed is increased, the ratio of the application area of the electrode material in the electrode plate decreases, and the capacity per unit volume of the battery decreases. Even in the case where the current collecting plate is used as an intermediate component, when the end portion of the current collector is assembled to improve quality of welding, the area of the end portion where the current collector is exposed has to be ensured to be large, and the capacity per unit volume of the battery decreases.

### MEANS FOR SOLVING THE PROBLEM

An aspect of the present disclosure relates to a power storage device including: a first electrode having a first current collector, and a first active material layer carried on the first current collector, a second electrode having a second current collector, and a second active material layer carried on the second current collector, and a separator interposed between the first electrode and the second electrode, wherein the first electrode and the second electrode are placed on top of another with the separator interposed therebetween to form a columnar wound body, the first electrode has a first portion A, a second portion A, and a first connection portion that connects the first portion A with the second portion A, and the first connection portion is folded so that the first portion A and the second portion A face each other, the first connection portion is provided in a band region of the first current collector along the winding direction of the wound body, as a first exposed portion not having the first active material layer and exposing the first current collector, the first portion A and the second portion A are portions each having the first active material layer at both sides of the first connection portion, and the second electrode is sandwiched between the first portion A and the second portion A with the separator interposed therebetween, and wound along the winding direction to form the wound body.

### Effects of the Invention

A power storage device with a high capacity and a high output can be easily achieved.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a plan view illustrating a configuration of a positive electrode (first electrode) of a power storage device of the embodiment of the present disclosure.
[FIG. 2] FIG. 2 is a plan view illustrating a configuration of a negative electrode (second electrode) of a power storage device of the embodiment of the present disclosure.
[FIG. 3] FIG. 3 is a schematic diagram illustrating a method, in which a positive electrode and a negative electrode are placed on top of another with a separator interposed therebetween to form a wound body.
[FIG. 4] FIG. 4 is an enlarged cross sectional view illustrating an example of shapes of bends of a first connection portion of a first electrode in a wound body.
[FIG. 5] FIG. 5 is a vertical cross sectional view illustrating a configuration of a power storage device of the embodiment of the present disclosure.

### DESCRIPTION OF THE EMBODIMENTS

Embodiments of the present disclosure will be described below. In the following description, embodiments of the present disclosure will be described in detail with reference to Examples. The present disclosure, however, is not limited to the following Examples. In the following description, specific numerical values and materials may be exemplified, but other numerical values and other materials may be used as long as the effect of the present disclosure is obtained.

A power storage device in an embodiment of the present disclosure includes a first electrode, a second electrode, a separator interposed between the first electrode and second electrode, and a first current collecting plate electrically connected to a first current collector. The first electrode has the first current collector, and a first active material layer carried on the first current collector. The second electrode has a second current collector, and a second active material layer carried on the second current collector. The first electrode and second electrode are placed on top of another with a separator interposed therebetween to form a columnar wound body.

The first electrode has a first portion A, a second portion A, and a first connection portion that connects the first portion A and the second portion A and also is folded. The folded first connection portion makes the first portion A and the second portion A face each other with the second electrode and separator interposed therebetween.

The first connection portion is provided in a band region in the first current collector along the winding direction of the wound body, as a first exposed portion not having the first active material layer and exposing the first current collector. The first portion A and second portion A are a portion having the first active material layer at both sides of the first connection portion.

The first portion A and second portion A are sandwiching the second electrode with a separator interposed therebetween, and wound along the winding direction to form the wound body. In this manner, the power storage device can achieve both a high capacity and a high output.

The first portion A and second portion A of the first electrode are spaced apart from each other with the first connection portion interposed therebetween. As shown in the figures to be described later, for example, the first portion A and the second portion A before forming the wound body face each other in the winding axis direction, with a band current collector exposed portion (first connection portion) extending along the winding direction interposed therebetween. The first electrode is folded at the first connection portion, so that the first portion A and the second portion A are facing each other. In this manner, a cross section of the first electrode at the first connection portion has a V shape or U shape, and the first portion A and the second portion A face each other. The first electrode and second electrode are wound with the separator to form the wound body, while sandwiching the second electrode and separator between the first portion A and second portion A facing each other. At this time, the first connection portion appears at one end face of the wound body, with the first current collector exposed.

At the first connection portion, the first current collector is exposed, and therefore the first connection portion can be connected to an external component, such as a battery can and terminal plate, or a current collecting plate to perform current collecting at the first electrode side. The first connection portion is bent or curved by about 180° from the first portion to the second portion, increasing its rigidity. Thus, unlike conventional configurations, in which by providing an exposed portion not having the active material layer at an end portion (edge portion) of the band current collector along the winding direction, projecting the current collector exposed portion at the end portion of the wound body, and joining the projected current collector exposed portion end portion to the current collecting plate, difficulties in welding are suppressed, caused by pressing the first connection portion against an external component and the like to weld, causing great deformation of the current collector exposed portion by excessive force from pressing. Without excessive deformation of the current collector exposed portion, a suitable pressure for welding can be given, and therefore stable welding can be performed.

The first electrode is produced by processing, for example, a band sheet, and because the first portion A and second portion A are folded to face each other and wound, the length of the band sheet in the winding direction may be half the conventional configuration. This shortens the winding length of the wound body when forming, improving productivity compared with the case where a wound body with the same diameter is produced using only the first portion A or second portion A.

Preferably, the first portion A is continuous with the second portion A with the first connection portion interposed therebetween. For example, as described above, by folding or bending, at the first connection portion, the first electrode having the first portion A and second portion A spaced apart from each other with the first connection portion interposed therebetween so that the first portion A and second portion A face each other, the first portion A and second portion A continuous with the first connection portion interposed therebetween can be formed.

Preferably, the separator is bent or folded like the first electrode. The separator may be folded so as to sandwich the first portion A and second portion A at an opposite side where the first connection portion of the wound body is disposed, or may be folded at a side where the first connection portion of the wound body is disposed so as to sandwich the second electrode.

The separator may be a bag type. The bag type separator may enfold the first portion or second portion, and may enfold the second electrode.

A plurality of through holes may be formed along the winding direction at the first connection portion. The plurality of through holes formed along the winding direction work as a perforation when bending the first electrode, and the first electrode can be easily bent along the perforation. Additionally, the through holes work as a hole for the liquid electrolyte to pass through in a produced power storage device, which improves liquid flowability of the liquid electrolyte. The through holes may be formed in a region excluding a region that makes contact with members to be joined in the connection portion.

The first connection portion may have a shape having a plurality of folds, pleats, or bends along the winding direction. These shapes of folds, pleats, or bends work as a spring that eases the pressure applied when welding, and suppresses excessive deformation of the first connection portion (mainly plastic deformation), and prevents the pressure to be applied to the first portion or second portion. Also, the increase in the elasticity of the connection portion allows the force against the member to be joined (current collecting plate, can, sealing plate) from the connection portion to be easily obtained. In this manner, the first connection portion can be stably welded to the external component and the like. Also, the increase in the welding points (area) stabilizes the welding. When the plurality of folds, pleats, or bends are formed excluding the region contacting the member to be joined in the connection portion, their operations as a spring are stabilized.

Similarly to the first electrode, the second electrode may also have a first portion B, a second portion B, and a second connection portion that connects the first portion B and the second portion B and also is folded. The folded second connection portion makes the first portion B and the second portion B face each other with the first electrode and separator interposed therebetween. The second connection portion is provided in a band region of the second current collector along the winding direction, as a second exposed portion not having the second active material layer and exposing the second current collector. The first portion B and second portion B of the second electrode are a portion having the second active material layer at both sides of the second connection portion.

The second electrode can be formed, like the first electrode, by folding a sheet electrode having the first portion B and second portion B spaced apart from each other with the second connection portion interposed therebetween at the second connection portion, so that the first portion B and the second portion B face each other. The second electrode and first electrode are wound along with the separator while sandwiching the first electrode and separator by the first portion B and second portion B facing each other to form a wound body. At this time, the second connection portion is disposed at an opposite side of a side where the first connection portion of the wound body is disposed. At the other end face of the wound body at an opposite side where the first connection portion is disposed, a second connection portion exposing the second current collector appears. Like the first connection portion, the second connection portion can be connected to an external component such as a battery can and terminal plate, or a current collecting plate to perform current collecting at the second electrode side.

One of the first electrode and second electrode forms a positive electrode of the power storage device, and the other of the first electrode and second electrode forms a negative electrode of the power storage device. The first electrode can be the positive electrode of the power storage device, or the second electrode can be the positive electrode of the power storage device. The first electrode having the first portion A, second portion A, and first connection portion can be any of the positive electrode and negative electrode of a power storage device, and it can be decided freely according to the configuration of the power storage device, without limitation.

The power storage device in an embodiment of the present disclosure is suitable for, for example, a non-aqueous electrolyte secondary battery, alkaline storage battery, capacitor, and contributes to achieving a high output with a non-aqueous electrolyte battery. The non-aqueous electrolyte battery includes a lithium ion secondary battery, solid-state battery, etc.

The power storage device includes, generally, a columnar wound body in which a positive electrode and a negative electrode are wound with a separator interposed therebetween, a case accommodating the wound body, and the above-described current collecting plate. The case has a cylinder portion, and a bottom portion sealing one end of the cylinder portion. In the case, the columnar wound body is accommodated so as to face the one end face of the wound body, and in the columnar wound body, the positive electrode and negative electrode are wound with the separator interposed therebetween. The other end of the cylinder portion of the case has an opening. The case opening is closed with the wound body accommodated, and kept airtight.

One electrode of the positive electrode and negative electrode of the wound body is generally electrically connected to the case. The other electrode of the positive electrode and negative electrode of the wound body is generally electrically connected to a terminal plate disposed at the other end of the cylinder portion. The terminal plate seals the opening formed at the other end of the cylinder portion. The opening of the cylinder portion and the terminal plate is sealed airtight. The opening of the case may be sealed by a method without particular limitation, and a known method can be used.

The first connection portion, i.e., the first electrode, can be electrically connected to the case, or electrically connected to the terminal plate. Similarly, the second connection portion, i.e., the second electrode, can be electrically connected to the case, or electrically connected to the terminal plate. The first connection portion and/or second connection portion may be connected directly with the case by, for example, welding, or directly connected to the terminal plate.

The first connection portion and/or second connection portion may be electrically connected to the case or terminal plate through a current collecting plate. The current collecting plate can be electrically connected to the exposed portion of the first current collector at the first connection portion or the exposed portion of the second current collector at the second connection portion at the end portion of the wound body, and can be electrically connected to the case bottom portion or terminal plate.

Hereinafter, an embodiment of the power storage device of the present disclosure will be described using a case where the power storage device of the present disclosure is used for a lithium ion secondary battery with reference to the figures. In the following, the first electrode is described as the positive electrode of the power storage device, and the second electrode is described as the negative electrode of the power storage device, but the present disclosure is not limited to these cases.

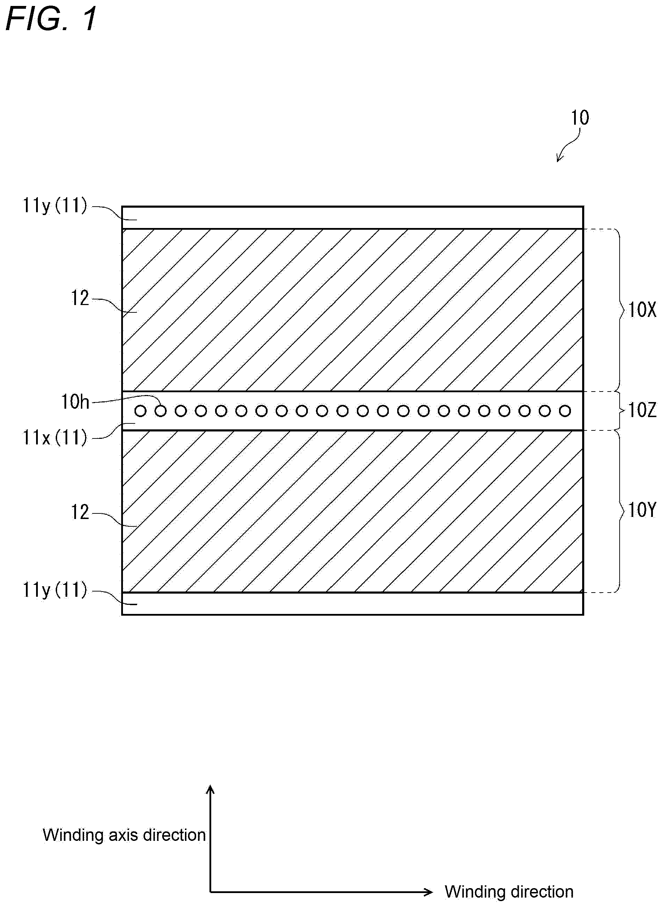

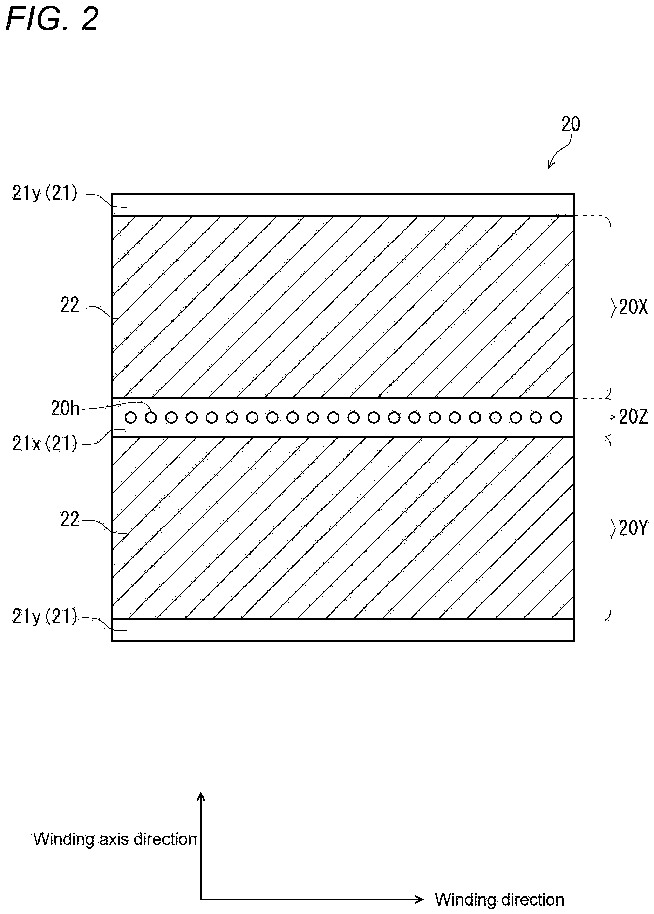

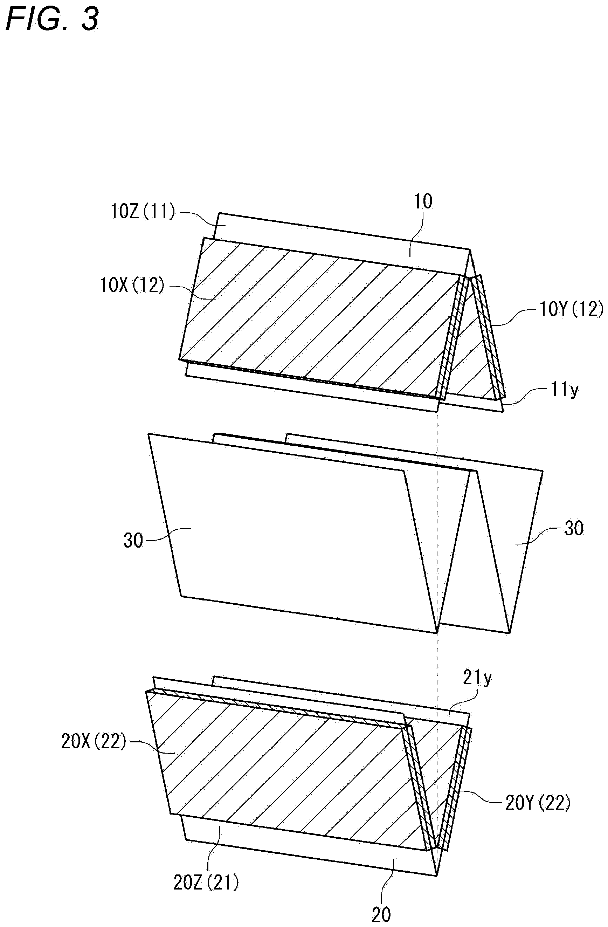

FIG. 1 and FIG. 2 are a plan view illustrating a configuration of a positive electrode (first electrode) and a negative electrode (second electrode) of a power storage device of an embodiment of the present disclosure before forming a wound body. FIG. 1 is a plan view illustrating a configuration of a positive electrode 10. FIG. 2 is a plan view illustrating a configuration of a negative electrode 20. FIG. 3 is a schematic diagram illustrating a method, in which a positive electrode 10 and a negative electrode 20 are placed on top of another with a separator interposed therebetween to form a wound body. FIG. 1 and FIG. 2 also show a winding direction when forming a wound body, and an axis direction of winding.

The positive electrode 10 is an elongated sheet in a longitudinal direction of the winding direction, and as shown in FIG. 1, has a positive electrode current collector (first current collector) 11, and a positive electrode active material layer (first active material layer) 12 carried thereon. The positive electrode active material layer 12 is formed on both sides of the positive electrode current collector 11.

The positive electrode 10 has a first portion 10X, a second portion 10Y, and a first connection portion 10Z that connects the first portion 10X with the second portion 10Y. The first connection portion 10Z is provided as a band region along the winding direction of the wound body, at a center in a winding axis direction of the positive electrode 10. The first portion 10X and the second portion 10Y face each other with the first connection portion 10Z in the winding axis direction interposed therebetween.

The first portion 10X and the second portion 10Y are a region where the positive electrode active material layer 12 is carried on both sides of the positive electrode current collector 11. Meanwhile, the first connection portion 10Z is a region not having the positive electrode active material layer 12, and in which a positive electrode current collector exposed portion (first exposed portion) 11x exposing the positive electrode current collector 11 is formed. In the positive electrode 10, another current collector exposed portion not having the positive electrode active material layer 12 can be formed at a place other than the positive electrode current collector exposed portion 11x. The positive electrode current collector exposed portion means a region on the positive electrode current collector 11 where the positive electrode active material layer 12 is not formed, and in the positive electrode current collector exposed portion, the positive electrode current collector 11 itself does not have to be exposed, and another conductive layer may be formed on the positive electrode current collector.

In the example of FIG 1, the positive electrode current collector exposed portion 11y not having the positive electrode active material layer 12 is disposed at both end portions along the winding direction of the positive electrode 10. The positive electrode current collector exposed portion 11y faces the first connection portion 10Z (positive electrode current collector exposed portion 11x) with the first portion 10X or second portion 10Y interposed therebetween. The end face along the winding direction of the positive electrode current collector exposed portion 11y and positive electrode 10 may be covered with an insulating layer, which is not shown, but it is not necessarily covered with the insulating layer.

A plurality of through holes 10h are formed along the winding direction, at a symmetric position in the winding axis direction of the first connection portion 10Z. The plurality of through holes 10h work as a perforation when bending the positive electrode 10 to form a wound body. The plurality of through holes 10h are not necessarily formed.

The negative electrode 20 is an elongated sheet having a longitudinal direction as the winding direction, as shown in FIG. 2, and has a negative electrode current collector (second current collector) 21, and a negative electrode active material layer (second active material layer) 22 carried thereon. The negative electrode active material layer 22 is formed on both sides of the negative electrode current collector 21.

The negative electrode 20 has a first portion 20X, a second portion 20Y, and a second connection portion 20Z that connects the first portion 20X with the second portion 20Y. The second connection portion 20Z is provided at a center in the winding axis direction of the negative electrode 20, as a band region along the winding direction of the wound body. The first portion 20X and the second portion 20Y face each other in the winding axis direction with the second connection portion 20Z interposed therebetween.

The first portion 20X and second portion 20Y are a region where the negative electrode active material layer 22 is carried on both sides of the negative electrode current collector 21. Meanwhile, the second connection portion 20Z is a region not having the negative electrode active material layer 22, and where the negative electrode current collector exposed portion (second exposed portion) 21x exposing the negative electrode current collector 21 is formed. In the negative electrode 20, another current collector exposed portion not having the negative electrode active material layer 22 can be formed at a place other than the negative electrode current collector exposed portion 21x. The negative electrode current collector exposed portion means a region on the negative electrode current collector 21 where the negative electrode active material layer 22 is not formed, and in the negative electrode current collector exposed portion, the negative electrode current collector 21 itself does not have to be exposed, and another conductive layer may be formed on the negative electrode current collector.

In the example of FIG 2, the negative electrode current collector exposed portion 21y not having the negative electrode active material layer 22 is disposed at both end portions along the winding direction of the negative electrode 20. The negative electrode current collector exposed portion 21y faces the second connection portion 20Z (negative electrode current collector exposed portion 21x) with the first portion 20X or second portion 20Y interposed therebetween. The end face along the winding direction of the negative electrode current collector exposed portion 21y and negative electrode 20 may be covered with an insulating layer, which is not shown, but it is not necessarily covered with the insulating layer.

A plurality of through holes 20h are formed along the winding direction, at a symmetric position in the winding axis direction of the second connection portion 20Z. The plurality of through holes 20h work as a perforation when bending the negative electrode 20 to form a wound body.

To form a wound body using the above-described positive electrode 10, negative electrode 20, and separator, for example, as shown in FIG. 3, a mountain fold is made along the through holes 10h with the positive electrode 10. Two separators 30 are prepared, and a valley fold is made with them. One of the valley-folded two separators 30 is placed so as to cover both sides of the first portion 10X of the positive electrode 10, and the other of the valley-folded two separators 30 is placed so as to cover both sides of the second portion 10Y of the positive electrode 10. A valley fold is made along the through holes 20h with the negative electrode 20, and placed on one of the valley-folded separators 30.

A columnar wound body is obtained by winding the positive electrode 10, negative electrode 20, and separator folded as described. The first connection portion 10Z of the positive electrode 10 is exposed at one end face of the wound body. The second connection portion 20Z of the negative electrode 20 is exposed at the other end face of the wound body. By electrically connecting the first connection portion 10Z and second connection portion 20Z with an external component and the like, the capacity of a power storage device can be kept high, and a high output can be achieved.

The separator may be a bag type. In the example of FIG 3, one of the two bag type separators may enfold the first portion 10X of the positive electrode 10, and the other of two bag type separators may enfold the second portion 10Y of the positive electrode 10, and the positive electrode 10 covered with the separators may be placed on the negative electrode 20. One of the two bag type separators may enfold the first portion 20X of the negative electrode 20, and the other of the two bag type separators may enfold the second portion 20Y of the negative electrode 20, and the negative electrode 20 covered with the separators may be placed on the positive electrode 10.

In the example of FIG 3, the separator 30 is bent at the negative electrode 20 side, and this suppresses electrically connection between the second connection portion 20Z with the first portion 10X or second portion 10Y of the positive electrode 10 to undergo short circuit. Thus, in this case, the positive electrode current collector exposed portion 11y covered with the insulating layer in FIG. 1 does not have to be formed. The positive electrode active material layer can be carried on the entire face of the positive electrode current collector excluding the positive electrode current collector exposed portion 11x, and the capacity of the power storage device can be further improved.

In the wound body, the first connection portion 10Z and second connection portion 20Z are pressed by external components and the like, and electrically connected to external components and the like by welding, etc. At this time, a suitable pressing force deforms contact portions such as external components of the first connection portion 10Z and second connection portion 20Z along the surface of external components. In this manner, the first connection portion 10Z and second connection portion 20Z make surface contact with the external components. By welding the portions making the surface contact, welding reliability improves, and electrical connection with external components becomes stronger.

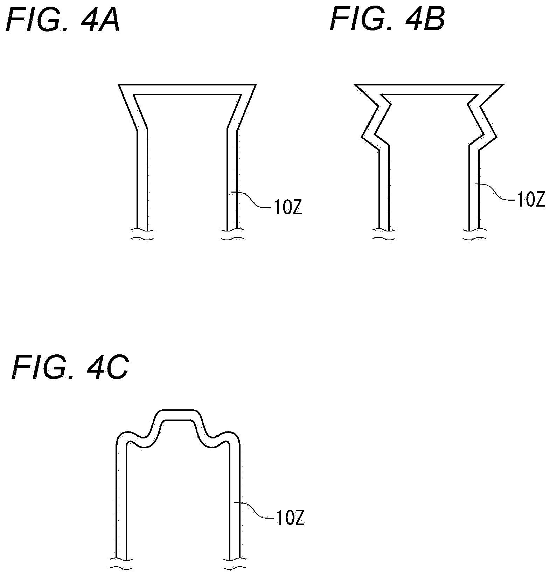

The first connection portion and/or second connection portion may have a shape having a plurality of folds, pleats, or bends along the winding direction. These shapes of plurality of folds, pleats, or bends are provided in the proximity of portions to be welded. FIG. 4 is an enlarged cross sectional view illustrating an example of a first connection portion 10Z (or second connection portion 20Z) in a wound body having shapes of folds, pleats, or bends.

In the example of FIG. 4, the shapes of the plurality of folds, pleats, or bends disposed in the proximity of a plane of welding portions work to absorb or ease the pressing force applied at the time of welding to the wound body, which suppresses excessive deformation of the first connection portion or second connection portion, and also suppresses the pressing force to propagate to the first portion or second portion. In this manner, the first connection portion and/or second connection portion can be stably welded to external components and the like. The shapes of the plurality of folds, pleats, or bends can be formed by subjecting the positive electrode 10 or negative electrode 20 in a sheet state to press molding, in a predetermined region of the first connection portion 10Z or second connection portion 20Z, as shown in FIG. 1 or FIG. 2.

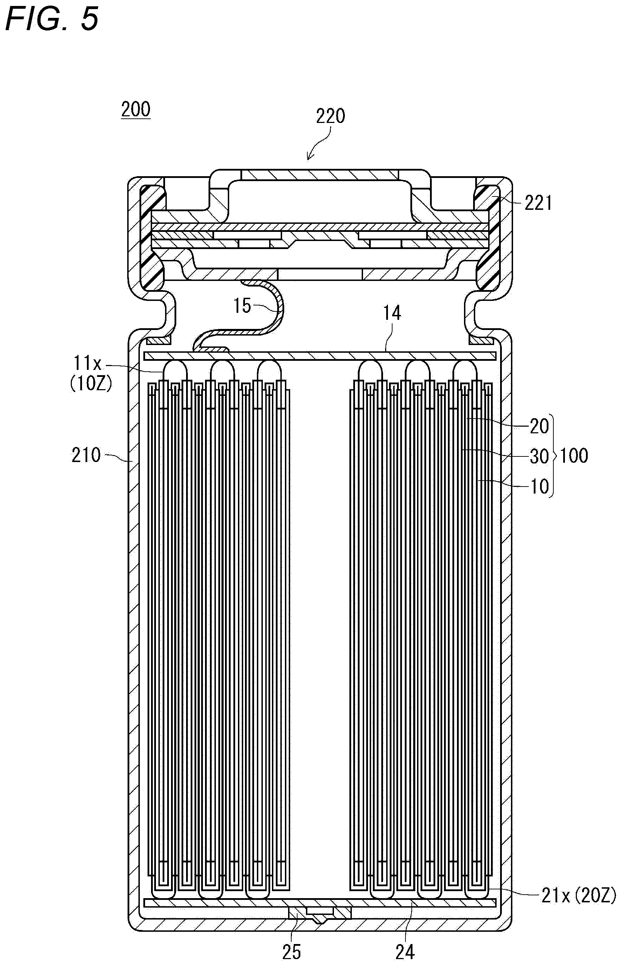

FIG. 5 is a vertical cross sectional view illustrating a configuration of a battery (lithium ion secondary battery) as an example of a power storage device of the embodiment of the present disclosure. A battery 200 has a wound body 100, formed into a column by winding a positive electrode 10 and a negative electrode 20 with a separator 30 interposed therebetween, a non-aqueous electrolyte (not shown), a wound body 100, a metal-made bottomed case 210 accommodating the wound body 100 and non-aqueous electrolyte, and a sealing plate 220 sealing the opening of the case 210. A gasket 221 is disposed at the peripheral edge portion of the sealing plate 220, and by crimping the opening end of the case 210 to the gasket 221, the inside of the case 210 is sealed.

Of the two end faces of the wound body 100, one end face abuts the positive electrode current collecting plate 14, and the other end face abuts the negative electrode current collecting plate 24. The positive electrode current collecting plate 14 abuts the positive electrode current collector exposed portion 11x of the first connection portion 10Z at one end face of the wound body 100, and the positive electrode current collecting plate 14 and the positive electrode current collector exposed portion 11x are welded. One end of a tab-lead 15 is connected to the positive electrode current collecting plate 14, and the other end is connected to an internal face of the sealing plate 220. Thus, the sealing plate 220 functions as an external positive electrode terminal.

Meanwhile, the negative electrode current collecting plate 24 abuts the negative electrode current collector exposed portion 21x of the second connection portion 20Z at the other end face of the wound body 100, and the negative electrode current collecting plate 24 and the negative electrode current collector exposed portion 21x are welded. The negative electrode current collecting plate 24 is welded to a welding member 25 provided at the inner bottom face in the case 210. Thus, the case 210 functions as an external negative electrode terminal.

The material forming the positive electrode current collecting plate 14 and negative electrode current collecting plate 24 is determined in accordance with the material forming the positive electrode and negative electrode. For example, when used as a positive electrode current collecting plate of a lithium ion secondary battery, the material of the positive electrode current collecting plate 14 is, for example, aluminum, aluminum alloy, titanium, stainless steel, etc. The material of the positive electrode current collecting plate 14 may be the same as that of the positive electrode current collector 11. For example, when used as the negative electrode current collecting plate of the lithium ion secondary battery, the material of the negative electrode current collecting plate 24 is, for example, copper, copper alloy, nickel, stainless steel, etc. The material of the negative electrode current collecting plate 24 may be the same as that of the negative electrode current collector 21.

The exposed portion of the current collector and the current collecting plate may be joined by, for example, laser welding. The laser can be applied radially to a plurality of portions, for example, from an opposite side of a face where the current collecting plate faces the end portion of the wound body (that is, first main surface side).

### (Positive electrode)

For the positive electrode current collector 11, a sheet metal material is used. The sheet metal material may be metal foil, metal porous body, etching metal, etc. Examples of the metal material include aluminum, aluminum alloy, nickel, and titanium. The positive electrode current collector has a thickness of, for example, 10 µm to 100 µm.

The positive electrode active material layer 12 includes, for example, a positive electrode active material, conductive material, and binder. The positive electrode active material layer 12 is produced by, for example, applying a positive electrode mixture slurry containing a positive electrode active material, conductive agent, and binder onto both sides of the positive electrode current collector 11, drying the applied coating, and then rolling. The positive electrode active material is a material that stores and releases lithium ions. Examples of the positive electrode active material include a lithium-containing transition metal oxide, fluorinated transition metal, polyanion, fluorinated polyanion, and sulfide of transition metals.

### (Negative electrode)

For the negative electrode current collector 21, a sheet metal material is used. The sheet metal material may be metal foil, metal porous body, etching metal. etc. Examples of the metal material include copper, copper alloy, nickel, and stainless steel. The negative electrode current collector has a thickness of, for example, 10 µm to 100 µm.

The negative electrode active material layer 22 includes, for example, a negative electrode active material, conductive agent, and binder. The negative electrode active material layer 22 is produced by, for example, applying a negative electrode mixture slurry containing a negative electrode active material, conductive agent, and binder onto both sides of the negative electrode current collector 21, drying the applied coating, and then rolling. The negative electrode active material is a material that stores and releases lithium ions. Examples of the negative electrode active material include a carbon material, metal compound, alloy, and ceramic material.

### (Separator)

For the separator 30, for example, a microporous film, woven cloth, nonwoven fabric, and the like of resin such as polyolefin may be used. The separator has a thickness of, for example, 10 to 300 µm, and preferably 10 to 40 µm.

### (Non-aqueous electrolyte)

The non-aqueous electrolyte has lithium ion conductivity, and includes a lithium salt and a non-aqueous solvent that dissolves the lithium salt.

### Industrial Applicability

Using the current collecting plate of the present disclosure, a high output power storage device can be achieved, and therefore it is suitable for, for example, vehicle applications. Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### Description of Reference Numerals

100: wound body
10: positive electrode (first electrode)
   10h: through hole
   10X: first portion
   10Y: second portion
   10Z: first connection portion
   11: positive electrode current collector
      11x, 1 ly: positive electrode current collector exposed portion
   12: positive electrode active material layer
20: negative electrode (second electrode)
   20h: through hole
   20X: first portion
   20Y: second portion
   20Z: second connection portion
   21: negative electrode current collector
      21x, 21y: negative electrode current collector exposed portion
   22: negative electrode active material layer
   30: separator
200: battery (power storage device)
   210: case

## Claims

1. A power storage device comprising: a first electrode having a first current collector, and a first active material layer carried on the first current collector,
a second electrode having a second current collector, and a second active material layer carried on the second current collector, and
a separator interposed between the first electrode and the second electrode, wherein the first electrode and the second electrode are placed on top of another with the separator interposed therebetween to form a columnar wound body,
the first electrode has a first portion A, a second portion A, and a first connection portion that connects the first portion A with the second portion A, and the first connection portion is folded so that the first portion A and the second portion A face each other,
the first connection portion is provided in a band region of the first current collector along the winding direction of the wound body, as a first exposed portion not having the first active material layer and exposing the first current collector,
the first portion A and the second portion A are portions each having the first active material layer at both sides of the first connection portion, and
the second electrode is sandwiched between the first portion A and the second portion A with the separator interposed therebetween, and wound along the winding direction to form the wound body.

2. The power storage device of claim 1, wherein the separator is folded so as to sandwich the first portion A and the second portion A at an opposite side of a side where the first connection portion of the wound body is disposed.

3. The power storage device of claim 1, wherein the separator is folded so as to sandwich the second electrode at a side where the first connection portion of the wound body is disposed.

4. The power storage device of any one of claims 1 to 3, wherein a plurality of through holes are formed at the first connection portion along the winding direction.

5. The power storage device of any one of claims 1 to 4, wherein the first connection portion has a shape along the winding direction of a plurality of folds, pleats, or bends.

6. The power storage device of any one of claims 1 to 5, wherein the first connection portion is electrically connected with a current collecting plate.

7. The power storage device of any one of claims 1 to 6, wherein the second electrode has a first portion B, a second portion B, and a second connection portion that connects the first portion B with the second portion B, and the second connection portion is folded so that the first portion B and the second portion B face each other,
the second connection portion is provided in a band region of the second current collector along the winding direction, as a second exposed portion not having the second active material layer and exposing the second current collector,
the first portion B and the second portion B of the second electrode are a portion having the second active material layer at both sides of the second connection portion,
the second connection portion is disposed at an opposite side of a side where the first connection portion of the wound body is disposed, and
in the wound body, the first portion B and the second portion B are sandwiching the first electrode with the separator interposed therebetween.
